Europäisches Patentamt

European Patent Office

Office européen des brevets

(11) Publication number: **0 589 148 A1**

# EUROPEAN PATENT APPLICATION

(21) Application number: **93109405.6**

(22) Date of filing: **11.06.93**

(51) Int. Cl.5: **G06F 7/52**

(30) Priority: **22.09.92 US 949320**

(43) Date of publication of application:
**30.03.94 Bulletin 94/13**

(84) Designated Contracting States:
**DE FR GB IT**

(71) Applicant: **MOTOROLA, INC.**
**1303 East Algonquin Road**
**Schaumburg, IL 60196(US)**

(72) Inventor: **Anderson, Donald C.**
**8004 Spandera Cove**
**Austin, Texas 78759(US)**

(74) Representative: **Hudson, Peter David et al**
**MOTOROLA**
**European Intellectual Property Operations**
**Jays Close**
**Viables Industrial Estate**
**Basingstoke Hants RG22 4PD (GB)**

(54) **Multiplexer circuit for modified booth's multiplier or the like.**

(57)  A multiplexer (80) for a modified Booth's multiplier or the like provides a 0X, ±1X, or ±2X output in response to recoded control signals. The multiplexer (80) includes two transmission gates (81, 82) which pass a multiplicand bit or a previous multiplicand bit to a first node (88) respectively in response to 1X and 2X recoded signals. A transistor (83) provides a logic low voltage on the first node (88) in response to a zero signal. An exclusive-OR gate (84, 85, 86) has a first input terminal connected to the first node, a second input terminal for receiving a subtract signal, and an output terminal for providing an output signal of the multiplexer (80) on a second node.

FIG.5

EP 0 589 148 A1

Field of the Invention

This invention relates generally to arithmetic circuits, and more particularly, to multiplexer circuits for modified Booth's multipliers or the like.

Background of the Invention

Multipliers are widely used in data processing applications, such as to implement a multiply instruction of a data processor's instruction set. When an accumulator is connected to the multiplier, an additional instruction known as a multiply and accumulate (MAC) is possible. MAC instructions are especially useful in digital signal processors (DSPs) because signal processing algorithms require frequent multiply-and-accumulate operations. For example, a finite impulse response (FIR) filter requires a group of samples to be multiplied by a set of filter coefficients and summed to provide an output. With a multiplier/accumulator available to perform a MAC instruction in hardware circuitry, signal processing software implementing an FIR filter function is fast and requires only a small amount of code.

A typical high-speed multiplier uses a modified version of Booth's algorithm, which is a well-known algorithm for reducing multiplication time by examining multiplier bits in groups. The modified Booth's multiplier recodes the multiplier bit groups to indicate whether an associated multiplication should be by zero, by plus or minus one, or by plus or minus two. Recoded control signals are provided to corresponding rows of multiplexers. In response to a recoded value of plus or minus one, the multiplexers pass a true or complement form of an associated multiplicand bit, respectively. In response to a recoded value of plus or minus two, the multiplexers pass a true or complement form of a previous multiplicand bit, respectively, which is equivalent to a shift by one bit position. In response to a recoded value of zero, the multiplexers provide a logic low voltage. The outputs of the multiplexer rows are periodically combined in carry-save adder stages throughout the array. The results of each carry-save adder stage are then summed together with the output of the accumulator in a Wallace tree. The Wallace tree reduces all the outputs of the various carry-save adder stages to two summands, which are then added together in a final carry-propagate or carry-lookahead adder stage to provide the accumulated product.

While speed is an important characteristic for a multiplier/accumulator, other characteristics are important as well. For example, to reduce the cost of a DSP, a multiplier/accumulator with minimum area is desired. However in a modified Booth's multiplier, the number of signal lines within the array is quite large. For example, in a 16-bit by 16-bit multiplier array added to a 25-bit accumulator value, fifty-six recoded signal lines must be routed in a first direction through the array, and forty-one input signal lines are routed in the second direction. Signal lines conducting the outputs of the carry-save adder stages must also propagate through the array in the second direction. While multiple-layer metal processing technologies allow more signal routing, each additional metal layer increases processing costs. In addition, the number of metal layers available is usually fixed. Thus, the signal line routing significantly increases the size of the typical modified Booth's array above the size required for the underlying circuitry. Consequently, a reduction in the size of the array would reduce the overall size of the multiplier/accumulator and reduce integrated circuit cost.

Summary of the Invention

Accordingly, there is provided, in one form, a multiplexer circuit for a modified Booth's multiplier or the like, comprising first and second switching means, a first transistor, and an exclusive-OR gate. The first switching means couples a first input signal to a first node in response to a first control signal. The second switching means couples a second input signal to the first node in response to a second control signal. The first transistor has a first current electrode coupled to the first node, a control electrode for receiving a third control signal, and a second current electrode coupled to a power supply voltage terminal. The exclusive-OR gate has a first input terminal coupled to the first node, a second input terminal for receiving a fourth control signal, and an output terminal coupled to a second node and providing an output signal of the multiplexer circuit thereon.

These and other features and advantages will be more clearly understood from the following detailed description taken in conjunction with the accompanying drawings.

2

Brief Description of the Drawings

FIG. 1 illustrates in block diagram form a modified Booth's multiplier/accumulator in accordance with the present invention.

FIG. 2 illustrates in schematic form a first multiplexer used in a modified Booth's array known in the prior art.

FIG. 3 illustrates in schematic form a second multiplexer used in a modified Booth's array known in the prior art.

FIG. 4 illustrates in logic diagram form a Booth's recoder used in the modified Booth's multiplier/accumulator of FIG. 1.

FIG. 5 illustrates one embodiment of a multiplexer circuit in accordance with the present invention.

FIG. 6 illustrates a second embodiment of the multiplexer circuit in accordance with the present invention.

Detailed Description of a Preferred Embodiment

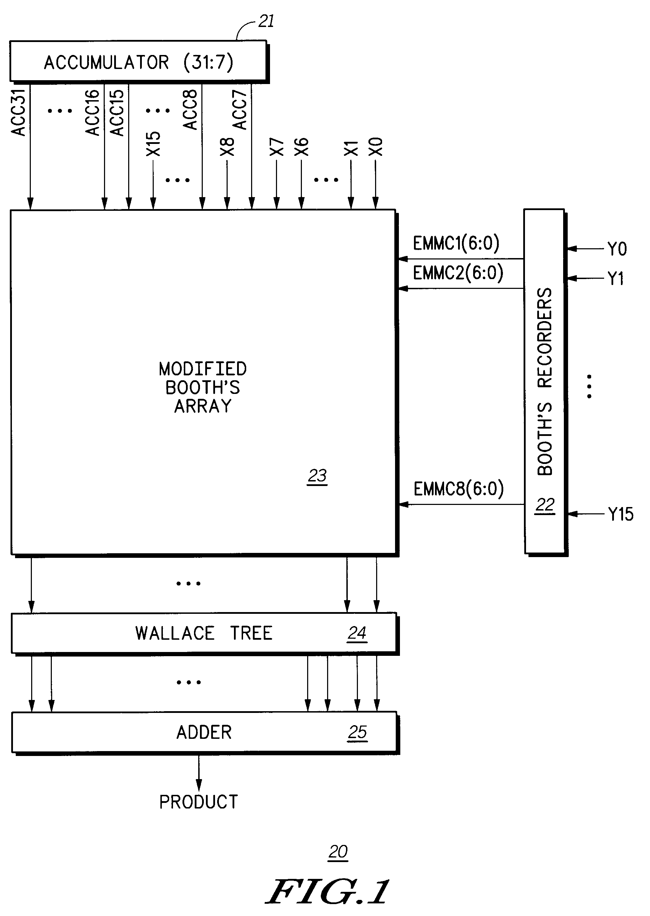

FIG. 1 illustrates in block diagram form a modified Booth's multiplier/accumulator 20 in accordance with the present invention. While a multiplexer in accordance with the present invention is described with reference to multiplier/accumulator 20, it should be apparent that such a multiplexer is equally useful in the context of a simple recoded multiplier or any similar apparatus. Multiplier/accumulator 20 is implemented in 0.8 micron, two-layer metal complementary-metal-oxide-semiconductor (CMOS) technology. Multiplier/accumulator 20 multiplies a 16-bit multiplier labelled "Y0-Y15" by a 16-bit multiplicand labelled "X0-X15" to provide a 32-bit product, which is truncated to include only the most-significant twenty-five bits. An accumulator 21 stores these most-significant twenty-five bits and provides them as bits labeled "ACC7-ACC31" during a multiply-and-accumulate (MAC) instruction.

Multiplier 20 uses a modified version of Booth's algorithm, which is a well-known algorithm for reducing multiplication time by examining multiplier bits in groups. A set of eight Booth's recoders 22 recode multiplier bit groups to indicate whether an associated multiplication should be by zero, by plus or minus one, or by plus or minus two. Each recoder provides six corresponding recoded control signals, designated "EMMCi(6:0)". FIG. 1 illustrates representative recoded signals labeled "EMMC1(6:0)", "EMMC2(6:0)", and "EMMC8(6:0)". A modified Booth's array 23 includes eight rows of multiplexers corresponding to each recoder. Each row of multiplexers corresponds to sixteen bit positions of a thirty-two bit product. The first row of multiplexers is aligned with the sixteen bits of the input multiplicand. Each succeeding row is shifted two bits from the preceding row so that the least-significant multiplexer in the second row is aligned with multiplicand bit X2, the least-significant multiplexer in the third row is aligned with multiplicand bit X4, etc.

In response to a recoded value of plus or minus one, the multiplexers pass or invert an associated multiplicand bit, respectively. In response to a recoded value of plus or minus two, the multiplexers pass or invert a previous multiplicand bit, respectively, which is equivalent to a shift by one bit position. In response to a recoded value of zero, the multiplexers provide a logic low voltage. The outputs of the multiplexer rows are periodically combined in carry-save adder stages throughout the array. Modified Booth's array 23 includes a first carry-save adder stage between the third and the fourth rows of multiplexers, a second carry-save adder stage between the sixth and seventh rows of multiplexers, and a third carry-save adder stage after the eighth row of multiplexers. The results of each carry-save adder stage are then summed, along with the output of accumulator 21 during a MAC instruction, in a Wallace tree 24. Wallace tree 24 reduces all the outputs of the various carry-save adder stages to two summands, which are then added together in a final adder 25 to provide an output labeled "PRODUCT".

A similar multiplier architecture for a multiplier/accumulator having an arbitrary size is taught by Kloker et al. in U.S. Patent No. 4,575,812, entitled "X X Y Bit Array Multiplier/Accumulator Circuit," issued March 11, 1986.

However, multiplier/accumulator 20 differs from known multiplier/accumulators in that modified Booth's array 23 includes multiplexers in accordance with the present invention which do not require the routing of both the multiplicand bit and its complement. Thus, modified Booth's array 23 is smaller and consumes less power than a comparable array using known multiplexers.

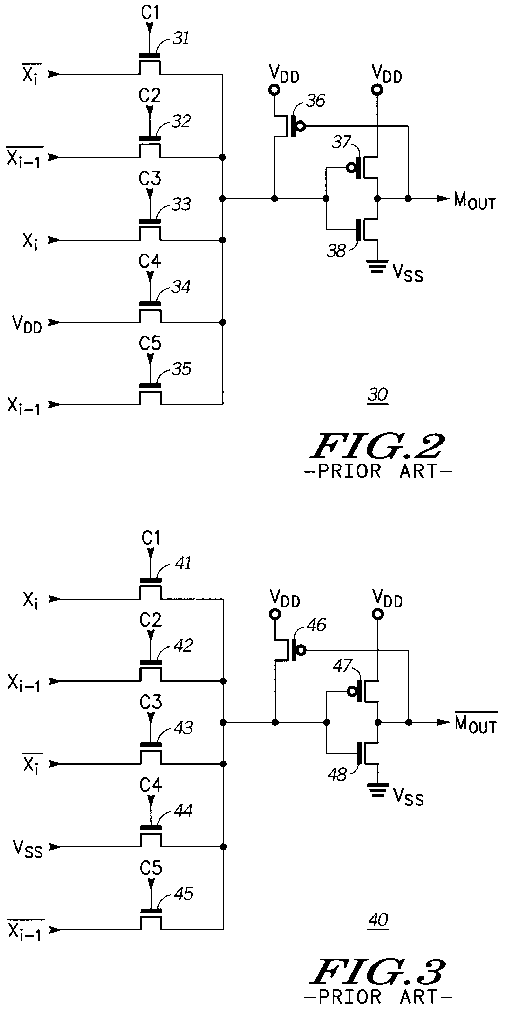

FIG. 2 illustrates in schematic form a first multiplexer 30 used in a modified Booth's array known in the prior art. Multiplexer 30 includes N-channel transistors 31-35, P-channel transistors 36 and 37, and an N-channel transistor 38. Transistor 31 has a first current electrode for receiving a signal labelled "$\overline{X_i}$", a gate for receiving a recoded control signal labelled "C1", and a second current electrode. Note that the designation of source and drain is avoided because which current electrode is the source and which current

3

electrode is the drain depends on the voltages applied. Transistor 32 has a first current electrode for receiving a signal labelled "$\overline{X_{i-1}}$", a gate for receiving a recoded control signal labelled "C2", and a second current electrode connected to the second current electrode of transistor 31. Transistor 33 has a first current electrode for receiving a signal labelled "$X_i$", a gate for receiving a recoded control signal labeled "C3", and a second current electrode connected to the second current electrode of transistor 31. Transistor 34 has a first current electrode for receiving a power supply voltage labeled "$V_{DD}$", a gate for receiving a recoded control signal labelled "C4", and a second current electrode connected to the second current electrode of transistor 31. $V_{DD}$ is a more-positive power supply voltage terminal having a nominal value of approximately five volts. Transistor 35 has a first current electrode for receiving a signal labelled "$X_{i-1}$", a gate for receiving a recoded control signal labelled "C5", and a second current electrode connected to the second current electrode of transistor 31.

Transistor 36 has a source connected to $V_{DD}$, a gate, and a drain connected to the second current electrode of transistor 31. Transistor 37 has a source connected to $V_{DD}$, a gate connected to the second current electrode of transistor 31, and a drain connected to the gate of transistor 36 and providing an output signal labelled "$M_{OUT}$". Transistor 38 has a drain coupled to the drain of transistor 37, a gate connected to the second current electrode of transistor 31, and a source connected to a power supply voltage terminal labelled "$V_{SS}$". $V_{SS}$ is a more-negative power supply voltage terminal with a nominal voltage of approximately zero volts.

Multiplexer 30 receives input signals C1-C5 which are outputs of a corresponding Booth's recoder having a logical relationship as illustrated in TABLE 1 below:

TABLE 1

| $Y_{i+1}$ | $Y_i$ | $C_{IN}$ | Multiplexer control lines | | | | | condition |
|---|---|---|---|---|---|---|---|---|
| | | | C1 | C2 | C3 | C4 | C5 | |
| 0 | 0 | 0 | 0 | 0 | 0 | 1 | 0 | 0X |
| 0 | 0 | 1 | 1 | 0 | 0 | 0 | 0 | + 1X |
| 0 | 1 | 0 | 1 | 0 | 0 | 0 | 0 | + 1X |
| 0 | 1 | 1 | 0 | 1 | 0 | 0 | 0 | + 2X |
| 1 | 0 | 0 | 0 | 0 | 0 | 0 | 1 | -2X |
| 1 | 0 | 1 | 0 | 0 | 1 | 0 | 0 | -1X |
| 1 | 1 | 0 | 0 | 0 | 1 | 0 | 0 | -1X |
| 1 | 1 | 1 | 0 | 0 | 0 | 1 | 0 | 0X |

where the value of $C_{IN}$ for any recoder is equal to $(Y_i + C_{IN}) \cdot Y_{i+1}$ of a previous recoder.

When active, recoded signals C1-C5 each make a corresponding one of pass transistors 31-35 conductive. Thus the input signal corresponding to the conductive transistor is passed to the input terminal of an inverter formed by transistors 37 and 38, and is inverted to provide output signal $M_{OUT}$. Transistor 36 is included to latch a logic high voltage on the input terminal of the inverter. As should be apparent, multiplexer 30 requires the routing of both the multiplicand bits $X_i$ and $X_{i-1}$ and their complements $\overline{X_i}$ and $\overline{X_{i-1}}$.

FIG. 3 illustrates in schematic form a second multiplexer 40 used in a modified Booth's array known in the prior art. Multiplexer 40 includes transistors 41-48 which are interconnected in the same pattern as corresponding transistors 31-38 of FIG. 2. However, transistors 41, 42, 43, 44, and 45 receive signals $X_i$, $X_{i-1}$, $\overline{X_i}$, $V_{SS}$, and $\overline{X_{i-1}}$, respectively, which are the complements of the signals received by corresponding transistors 31, 32, 33, 34, and 35.

Referring now to FIGs. 2 and 3 together, each multiplexer has eight transistors and receives five control signals from a corresponding Booth's recoder, and four input signals including true and complement inputs from both a given bit position and a previous bit position. Converting the N-channel pass transistors into full CMOS transmission gates adds an extra five transistors for a total of eleven transistors.

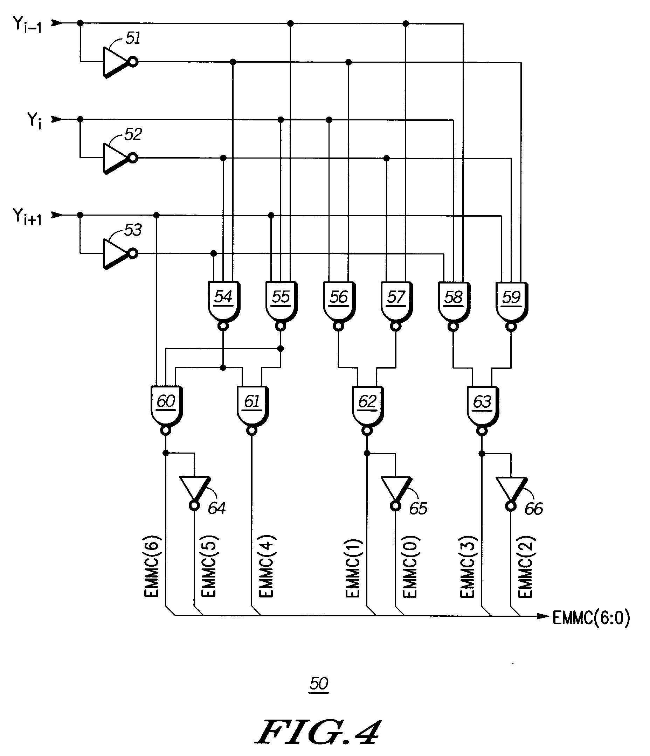

FIG. 4 illustrates in logic diagram form a Booth's recoder 50 used in modified Booth's multiplier/accumulator 20 of FIG. 1. Recoder 50 is one of eight recoders used in Booth's recoders 22 of FIG. 1. A first recoder receives $V_{SS}$ and multiplier bits Y0 and Y1, and provides recoded signals EMMC1(6:0). A second recoder receives multiplier bits Y1, Y2, and Y3, and provides recoded signals EMCC2(6:0). Each subsequent recoder receives an adjacent multiplier bit input to a previous recoder. The pattern repeats until an eighth recoder receives multiplier bits Y13, Y14, and Y15, and provides recoded signals EMMC8(6:0).

Recoder 50 thus represents any one of the eight recoders. Recoder 50 includes inverters 51-53, NAND gates 54-63, and inverters 64-66. Inverter 51 has an input terminal for receiving multiplier signal $Y_{i-1}$, and an output terminal. Inverter 52 has an input terminal for receiving multiplier signal $Y_i$, and an output terminal. Inverter 53 has an input terminal for receiving multiplier signal $Y_{i+1}$, and an output terminal. NAND gate 54 is a three-input NAND gate having a first input terminal connected to the output terminal of inverter 51, a second input terminal connected to the output terminal of inverter 52, a third input terminal connected to the output terminal of inverter 53, and an output terminal. NAND gate 55 is a three-input NAND gate having a first input terminal for receiving multiplier signal $Y_{i-1}$, a second input terminal for receiving multiplier signal $Y_i$, a third input terminal for receiving multiplier signal $Y_{i+1}$, and an output terminal. NAND gate 56 has a first input terminal connected to the output terminal of inverter 51, a second input terminal for receiving multiplier signal Yi, and an output terminal. NAND gate 57 has a first input terminal for receiving multiplier signal Yi-1, a second input terminal connected to the output terminal of inverter 52, and an output terminal. NAND gate 58 is a three-input NAND gate having a first input terminal for receiving multiplier signal $Y_{i-1}$, a second input terminal for receiving multiplier signal $Y_i$, a third input terminal for receiving multiplier signal $Y_{i+1}$, and an output terminal. NAND gate 59 is a three-input NAND gate having a first input terminal connected to the output terminal of inverter 51, a second input terminal connected to the output terminal of inverter 52, a third input terminal connected to the output terminal of inverter 53, and an output terminal.

NAND gate 60 is a three-input NAND gate having a first input terminal for receiving multiplier signal Yi+1, a second input terminal connected to the output terminal of NAND gate 54, a third input terminal connected to the output terminal of NAND gate 55, and an output terminal for providing a recoded signal labelled "EMMC(6)". NAND gate 61 has a first input terminal connected to the output terminal of NAND gate 54, a second input terminal connected to the output terminal of NAND gate 55, and an output terminal for providing a recoded signal labelled "EMMC(4). NAND gate 62 has a first input terminal connected to the output terminal of NAND gate 56, a second input terminal connected to the output terminal of NAND gate 57, and an output terminal for providing a recoded signal labeled "EMMC(1)". NAND gate 63 has a first input terminal connected to the output terminal of NAND gate 58, a second input terminal connected to the output terminal of NAND gate 59, and an output terminal for providing a recoded signal labeled "EMMC(3)". Inverter 64 has an input terminal connected to the output terminal of NAND gate 60, and an output terminal for providing a recoded signal labelled "EMMC(5)". Inverter 65 has an input terminal connected to the output terminal of NAND gate 602, and an output terminal for providing a recoded signal labelled "EMMC-(0)". Inverter 66 has an input terminal connected to the output terminal of NAND gate 63, and an output terminal for providing a recoded signal labelled "EMMC(2)".

Recoder 50 recodes multiplier input bits to represent standard 0, ±1, and ±2 recoded Booth's signals provided to modified Booth's array 23 as illustrated in TABLE II below:

TABLE II

| $Y_{i-1}$ | $Y_i$ | $Y_{i+1}$ | EMMC | | | | | | | recoding condition |
|---|---|---|---|---|---|---|---|---|---|---|
| | | | 6 | 5 | 4 | 3 | 2 | 1 | 0 | |
| 0 | 0 | 0 | 1 | 0 | 1 | 0 | 1 | 0 | 1 | 0X |
| 0 | 0 | 1 | 0 | 1 | 0 | 1 | 0 | 0 | 1 | -2X |
| 0 | 1 | 0 | 1 | 0 | 0 | 0 | 1 | 1 | 0 | +1X |
| 0 | 1 | 1 | 0 | 1 | 0 | 0 | 1 | 1 | 0 | -1X |
| 1 | 0 | 0 | 1 | 0 | 0 | 0 | 1 | 1 | 0 | +1X |
| 1 | 0 | 1 | 0 | 1 | 0 | 0 | 1 | 1 | 0 | -1X |
| 1 | 1 | 0 | 1 | 0 | 0 | 1 | 0 | 0 | 1 | +2X |
| 1 | 1 | 1 | 1 | 0 | 1 | 0 | 1 | 0 | 1 | 0X |

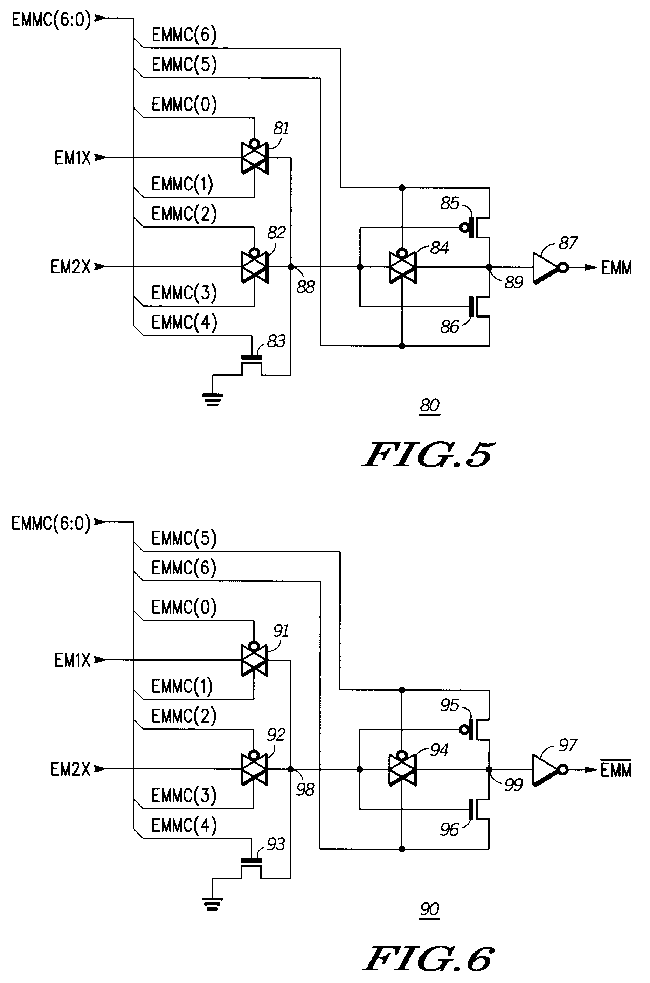

It should be apparent that other logic circuits implementing the truth table in TABLE II may also be used with a multiplexer circuit described in FIGs. 5 and 6 below.

Six of the seven recoded signals can be grouped into complementary pairs. Signals EMMC(5) and EMMC(6) represent a subtract recoding, with signal EMMC(5) being active at a logic high and signal EMMC(6) being active at a logic low in response to the subtract recoding. Signals EMMC(3) and EMMC(2) represent a 2X recoding, with signal EMMC(3) being active at a logic high and signal EMMC(2) being active at a logic low in response to the 2X recoding. Signals EMMC(1) and EMMC(0) represent a 1X recoding, with signal EMMC(1) being active at a logic high and signal EMMC(0) being active at a logic low in response to the 1X recoding. Signal EMMC(4) is an active-high signal representing a 0X encoding and has no corresponding complementary signal.

FIG. 5 illustrates one embodiment of a multiplexer circuit 80 in accordance with the present invention. Multiplexer circuit 80 includes transmission gates 81 and 82, an N-channel transistor 83, a transmission gate 84, a P-channel transistor 85, an N-channel transistor 86, and an inverter 87. Transmission gate 81 has a first terminal for receiving a first input signal labelled "EM1X", a second terminal connected to a first node 88, a true control input terminal for receiving recoded signal EMMC(1), and a complement control input terminal for receiving recoded signal EMMC(0). Transmission gate 82 has a first terminal for receiving a second input signal labelled "EM2X", a second terminal connected to first node 88, a true control input terminal for receiving recoded signal EMMC(3), and a complement control input terminal for receiving recoded signal EMMC(2). Transistor 83 has a drain connected to first node 88, a gate for receiving recoded signal EMMC(4), and a source connected to $V_{SS}$. Transmission gate 84 has a first terminal connected to first node 88, a second terminal connected to a second node 89, a true control input terminal for receiving recoded signal EMMC(5), and a complement control input terminal for receiving recoded signal EMMC(6). Transistor 85 has a source for receiving recoded signal EMMC(6), a gate connected to the second terminal of transmission gate 81, and a drain connected to second node 89. Transistor 86 has a drain connected to second node 89, a gate connected to the second terminal of transmission gate 81, and a source for receiving recoded signal EMMC(5). Inverter 87 has an input terminal connected to second node 89, and an output terminal for providing a multiplexer output signal labelled "EMM". Transmission gate 84 and transistors 85 and 86 together form a CMOS exclusive-OR gate. The CMOS exclusive-OR gate has a first input for receiving a voltage at node 88, a second input for receiving a signal represented by complementary signals EMMC(6) and EMMC(5), and an output connected to node 89.

For 0X recoding, signal EMMC(4) is active, making transistor 83 conductive and connecting node 88 to $V_{SS}$. Signal EMMC(6) is at a logic high and signal EMMC(5) is active at a logic low, making transmission gate 84 nonconductive. Transistors 85 and 86 form a controlled CMOS inverter; in this case, signals EMMC(6) and EMMC(5) make the controlled inverter active, providing a logic high voltage on node 89. Inverter 87 then provides output signal EMM at a logic low voltage.

For +1X recoding, signal EMMC(1) is active at a logic high and signal EMMC(0) is active at a logic low. All other recoded signals are inactive at their respective logic states. Transmission gate 81 is conductive, coupling multiplicand signal EM1X to node 88. Since signals EMMC(6) and EMMC(5) are active, making transmission gate 84 nonconductive. However, the controlled inverter is active, and provides the complement of multiplicand signal EM1X on node 89. Output signal EMM thus represents multiplicand signal EM1X. For -1X recoding, multiplicand signal EM1X passes through transmission gate 81 to node 88 and transmission gate 84 to node 89. Output signal EMM represents a complement of multiplicand signal EM1X.

For +2X recoding, signal EMMC(3) is active at a logic high and signal EMMC(2) is active at a logic low. All other recoded signals are inactive at their respective logic states. Transmission gate 82 is conductive, coupling multiplicand signal EM2X to node 88. Since signals EMMC(6) and EMMC(5) are active, making transmission gate 84 nonconductive. However, the controlled inverter is active, and provides the complement of multiplicand signal EM2X on node 89. Output signal EMM thus represents multiplicand signal EM2X. For -2X recoding, multiplicand signal EM2X passes through transmission gate 81 to node 88 and transmission gate 84 to node 89. Output signal EMM represents a complement of multiplicand signal EM2X.

It should be apparent that in other embodiments single signals for subtract, 1X, and 2X recoding may be used. However, because CMOS technology is being used, full-CMOS transmission gates, which require true and complement control signals, are preferred.

FIG. 6 illustrates a second embodiment of the multiplexer circuit 90 in accordance with the present invention. Multiplexer circuit 90 includes transmission gates 91 and 92, an N-channel transistor 93, a transmission gate 94, a P-channel transistor 95, an N-channel transistor 96, and an inverter 97. Transmission gate 91 has a first terminal for receiving signal EM1X, a second terminal connected to a first node 98, a true control input terminal for receiving recoded signal EMMC(1), and a complement control input terminal for receiving recoded signal EMMC(0). Transmission gate 92 has a first terminal for receiving a second input signal EM2X, a second terminal connected to first node 98, a true control input terminal for receiving recoded signal EMMC(3), and a complement control input terminal for receiving recoded signal EMMC(2).

Transistor 93 has a drain connected to first node 98, a gate for receiving recoded signal EMMC(4), and a source connected to $V_{SS}$. Transmission gate 94 has a first terminal connected to first node 98, a second terminal connected to a second node 99, a true control input terminal for receiving recoded signal EMMC-(6), and a complement control input terminal for receiving recoded signal EMMC(5). Transistor 95 has a source for receiving recoded signal EMMC(5), a gate connected to the second terminal of transmission gate 91, and a drain connected to second node 99. Transistor 96 has a drain connected to second node 99, a gate connected to the second terminal of transmission gate 91, and a source for receiving recoded signal EMMC(5). Inverter 87 has an input terminal connected to second node 99, and an output terminal for providing a multiplexer output signal labelled "$\overline{EMM}$". Transmission gate 94 and transistors 95 and 96 together form a CMOS exclusive-OR gate. The CMOS exclusive-OR gate has a first input for receiving a voltage at node 98, a second input for receiving a signal represented by complementary signals EMMC(5) and EMMC(6), and an output connected to node 99.

Multiplexer 90 operates substantially the same as multiplexer 80 but with one difference. Multiplexer 90 provides as an output a complement of signal EMM, active-low output signal $\overline{EMM}$. Transmission gate 94 receives subtract signals EMMC(6) and EMMC(5) at the true and complement input terminals thereof; however, corresponding transmission gate 84 received subtract signals EMMC(5) and EMMC(6) at the true and complement input terminals thereof. In addition, the sources of transistor 95 and 96 receive signals EMMC(5) and EMMC(6), respectively, the opposite of multiplexer 80.

Referring now to FIGs. 5 and 6 together, each multiplexer has eleven transistors and receives seven control signals from a corresponding Booth's recoder, and two input signals including only a true input from a given bit position and a previous bit position. Multiplexers 80 and 90 do not require the routing of the complement of each input signal. Two signal lines per bit position are saved compared to multiplexer 30 of FIG. 2, allowing the overall size and power consumption of the multiplier array to be reduced.

While the invention has been described in the context of a preferred embodiment, it will be apparent to those skilled in the art that the present invention may be modified in numerous ways and may assume many embodiments other than that specifically set out and described above. For example, the CMOS transmission gates may be replaced by other switching devices such as pass transistors, and may be conductive in response to only one control signal. In addition, controlled inverters formed by transistors 85 and 86 in multiplexer 80, or transistors 95 and 96 in multiplexer 90, may be replaced by other circuit elements which performed controlled inversion. In addition, other transistor technologies may be used. Also, multiplexers 80 and 90 may be used in simple recoded multipliers or like circuitry as well as multiplier/accumulators. Accordingly, it is intended by the appended claims to cover all modifications of the invention which fall within the true spirit and scope of the invention.

## Claims

1. A multiplexer circuit (80) for a modified Booth's multiplier or the like, comprising:

   first switching means (81) for coupling a first input signal to a first node (88) in response to a first control signal;

   second switching means (82) for coupling a second input signal to said first node (88) in response to a second control signal;

   a first transistor (83) having a first current electrode coupled to said first node (88), a control electrode for receiving a third control signal, and a second current electrode coupled to a power supply voltage terminal; and

   an exclusive-OR gate (84, 85, 86) having a first input terminal coupled to said first node, a second input terminal for receiving a fourth control signal, and an output terminal coupled to a second node and providing an output signal of the multiplexer circuit (80) thereon.

2. The multiplexer circuit (80) of claim 1 wherein said exclusive OR gate (84, 85, 86) comprises:

   third switching means (84) for coupling said first node to said second node (89) in response to said fourth control signal; and

   controlled inversion means (85, 86) for inverting a voltage on said first node (88) and providing said inverted voltage to said second node (89) in response to a complement of said fourth control signal.

3. The multiplexer circuit (80) of claim 2 wherein said controlled inversion means (85, 86) comprises:

   a second transistor (85) having a first current electrode for receiving a complement of said fourth control signal, a control electrode coupled to said first node (88, 98), and a second current electrode coupled said second node (89, 99); and

EP 0 589 148 A1

a third transistor (86) having a first current electrode coupled to said second node (89, 99), a control electrode coupled to said first node (88, 98), and a second current electrode for receiving said fourth control signal.

4. A multiplexer circuit (80, 90) for a modified Booth's multiplier or the like, comprising:

first switching means (81, 91) for coupling a first input signal to a first node (88, 98) in response to a first control signal;

second switching means (82, 91) for coupling a second input signal to said first node (88, 98) in response to a second control signal;

third switching means (84, 94) for coupling said first node to a second node (89, 99) in response to a third control signal;

a first transistor (83, 93) having a first current electrode coupled to said first node (88, 98), a control electrode for receiving a fourth control signal, and a second current electrode coupled to a power supply voltage terminal;

a second transistor (85) having a first current electrode for receiving a complement of said fourth signal, a control electrode coupled to said first node (88, 98), and a second current electrode coupled said second node (89, 99); and

a third transistor (86) having a first current electrode coupled to said second node (89, 99), a control electrode coupled to said first node (88, 98), and a second current electrode for receiving said fourth signal.

5. The multiplexer circuit (80) of claim 1 or claim 4 wherein said first switching means (81) comprises a first transmission gate (81) having a first terminal for receiving said first input signal, a second terminal coupled to said first node (88), a true control terminal for receiving said first control signal, and a complement control terminal for receiving a complement of said first control signal.

6. The multiplexer circuit (80) of claim 1 or claim 4 wherein said second switching means (82) comprises a second transmission gate (82) having a first terminal for receiving said second input signal, a second terminal coupled to said first node (88), a true control terminal for receiving said second control signal, and a complement control terminal for receiving a complement of said second control signal.

7. The multiplexer circuit (80) of claim 3 or claim 4 wherein said third switching means (84) comprises a third transmission gate (84) having a first terminal coupled to said first node (88), a second terminal coupled to said second node (89), a true control terminal for receiving said fourth control signal, and a complement control terminal for receiving a complement of said fourth control signal.

8. The multiplexer circuit (80) of claim 1 or claim 4 wherein said first control signal is a recoded 1X signal, wherein said second control signal is a recoded 2X signal, wherein said third control signal is a recoded zero signal, and wherein said fourth control signal is a recoded subtract signal.

9. A multiplexer circuit (80) for a modified Booth's multiplier or the like, comprising:

a first transmission gate (81) having an input terminal for receiving a first input, a true control terminal for receiving a true 1X control signal, a complement control terminal for receiving a complement 1X control signal, and an output terminal;

a second transmission gate (82) having an input terminal for receiving a second input, a true control terminal for receiving a true 2X control signal, a complement control terminal for receiving a complement 2X control signal, and an output terminal coupled to said output terminal of said first transmission gate (81);

a first transistor (83) having a first current electrode coupled to said output terminals of said first (81) and second (82) transmission gates, a control electrode for receiving a zero control signal, and a second current electrode coupled to a power supply voltage terminal;

a third transmission gate (84) having an input terminal coupled to said output terminals of said first (81) and second (82) transmission gates and to said first current electrode of said first transistor (83), a true control terminal for receiving a true subtract control signal, a complement control terminal for receiving a complement subtract control signal, and an output terminal for providing an output signal;

a second transistor (85) having a first current electrode for receiving said complement subtract signal, a control electrode coupled to said output terminals of said first (81) and second (82) transmission gates and to said first current electrode of said first transistor (83), and a second current

8

**EP 0 589 148 A1**

electrode coupled said output terminal of said third transmission gate (84); and

a third transistor (86) having a first current electrode coupled to said second current electrode of said second transistor (85), a control electrode coupled to said output terminals of said first (81) and second (82) transmission gates and to said first current electrode of said first transistor (83), and a second current electrode for receiving said complement subtract signal.

10. The multiplexer circuit (80) of claim 1, claim 4, or claim 9 further comprising an inverter (87) having an input terminal coupled to said output terminal of said third transmission gate (84), and an output terminal for providing a second output signal.

9

FIG.1

**FIG.2**
-PRIOR ART-

**FIG.3**
-PRIOR ART-

## FIG.4

50

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 249 040 (K. K. TOSHIBA)<br>* claims; figure 3 *<br>--- | 1-10 | G06F7/52 |
| Y<br>A | EP-A-0 447 254 (C-CUBE MICROSYSTEMS)<br>* abstract; claims 2,6,8; figures 4-8 *<br>--- | 1<br>2-10 | |
| Y | DD-A-228 097 (AKADEMIE DER WISSENSCHAFTEN DER DDR)<br>* page 5, line 24 - line 33; figure 1 *<br>--- | 1 | |
| A<br>D | WO-A-8 505 705 (MOTOROLA, INC.)<br>* the whole document *<br>& US-A-4 575 812<br><br>----- | 1-10 | |
| | | | TECHNICAL FIELDS SEARCHED (Int. Cl.5) |
| | | | G06F |

The present search report has been drawn up for all claims

| Place of search | Date of completion of the search | Examiner |
|---|---|---|
| BERLIN | 25 NOVEMBER 1993 | DURAND J. |

EPO FORM 1503 03.82 (P0401)